# DEMANDE DE BREVET EUROPEEN

(11) **EP 3 882 075 A1**
(43) Date de publication de la demande: **22.09.2021**
(21) Numéro de dépôt: 21162611.4
(22) Date de dépôt: 15.03.2021
(51) Int. Cl.: B60P 3/22

(54) **CITERNE COMPORTANT UNE PLURALITE DE BERCEAUX DE SUPPORT**

(30) Priorité: 17.03.2020 FR 2002584
(71) Demandeur: Etablissements MAGYAR, 21000 Dijon (FR)
(72) Inventeur: MAGYAR, Daniel, 75012 Paris (FR); MAGYAR, Laurent, 75001 PARIS (FR)
(74) Mandataire: Cabinet Camus Lebkiri

(57) **Abrégé**

L'invention concerne une citerne (100) pour le transport de produits liquides, pulvérulents ou gazeux comportant une cuve de stockage (120) s'étendant selon un axe longitudinal (X), un châssis (111), une pluralité de berceaux de support solidaire dudit châssis (111), chaque berceau de support de ladite pluralité définissant une surface de support sensiblement curviligne configurée pour recevoir et soutenir ladite cuve de stockage (120), ladite citerne étant caractérisée en ce que ladite cuve de stockage (120) est rendue solidaire de ladite surface de support de chaque berceau de support de ladite pluralité par des cordons de soudure et en ce que ladite cuve de stockage (120) présente une portion basse (ZN), située en regard de la surface de support, dépourvue de cordons de soudure.

## Description

### DOMAINE TECHNIQUE DE L'INVENTION

La présente invention se rapporte au domaine des citernes utilisées de manière générale pour le stockage et le transport de produits liquides, pulvérulents ou gazeux.

L'invention concerne plus particulièrement une architecture innovante d'une citerne améliorant les opérations de vidange et ainsi que le drainage des produits stockés dans la citerne, notamment lors des opérations de vidange.

L'invention trouve une application particulièrement pertinente dans le domaine des véhicules citernes pour le transport de produits liquides.

### ARRIERE PLAN TECHNOLOGIQUE DE L'INVENTION

Les citernes, et plus particulièrement les véhicules citernes, sont utilisées pour le stockage de produits liquides, pulvérulents ou gazeux, et sont généralement équipées d'un châssis, d'une cuve de stockage, et d'éléments de renforcement solidaires du châssis destinés à recevoir et à maintenir en position de la cuve de stockage et à reprendre et supporter les efforts encaissés par la cuve de la citerne. Ainsi, on considère comme véhicules citernes aussi bien les porteurs présentant une citerne transportée sur un châssis directement relié de manière solidaire au tracteur, que les camions-citernes présentant une citerne transportée sur le châssis d'une remorque articulée et amovible par rapport au tracteur.

A ce titre, les éléments de renforcement solidaires du châssis de véhicules citernes sont par exemple des berceaux de support, présentant une forme curviligne complémentaire de la forme de la cuve. Ces berceaux de support sont adaptés pour recevoir et supporter la cuve de la citerne. Les berceaux de support sont solidaires du châssis de la remorque et sont conçus, dans leur forme et leurs dimensions, pour encaisser les différentes contraintes auxquelles sont soumises la citerne ainsi que la cuve lors de son utilisation, comme notamment les contraintes dues au roulage, les contraintes dues à l'augmentation de la pression dans la cuve ou encore à la dépression de la cuve lors des opérations de remplissage ou de vidange.

Par assurer la reprise des efforts générés sur la structure de la cuve de stockage, la cuve de stockage est généralement soudée dans sa partie inférieure aux berceaux de support, de sorte que les berceaux de support ainsi que la cuve forment un ensemble monobloc.

Toutefois, il arrive que cette opération de soudage occasionne des déformations locales de la cuve, notamment au niveau des zones de soudure, ou encore des zones de contact entre la cuve et les berceaux de support.

Ces déformations locales, lorsqu'elles sont localisées en partie basse de la cuve, peuvent engendrer localement des rétentions de produits à l'intérieur de la cuve, réduisant l'efficacité du nettoyage et occasionnant un risque de contamination entre les différents produits stockés et transportés, ce qui n'est pas acceptable.

### EXPOSE DE L'INVENTION

Dans ce contexte, l'invention vise à proposer une architecture améliorée d'une citerne pour le stockage et le transport de produits liquides, pulvérulents ou gazeux permettant de résoudre les problèmes mentionnés précédemment.

L'architecture de la citerne proposée par l'invention permet d'améliorer la drainabilité des produits stockés dans la cuve afin d'écarter tout risque de contamination des produits lors de différents remplissages et utilisations.

A cette fin, l'invention concerne une citerne pour le transport de produits liquides, pulvérulents ou gazeux comportant une cuve de stockage s'étendant selon un axe longitudinal X, un châssis, une pluralité de berceaux de support solidaires dudit châssis, chaque berceau de support de ladite pluralité définissant une surface de support sensiblement curviligne configurée pour recevoir et soutenir ladite cuve de stockage, ladite citerne étant caractérisée en ce que ladite cuve de stockage est rendue solidaire de ladite surface de support de chaque berceau de support de ladite pluralité par des cordons de soudure et en ce que ladite cuve de stockage présente une zone située en regard de la surface de support et dépourvue de cordons de soudure, qui forme la portion basse de ladite cuve de stockage, située en regard de la surface de support, dépourvue de cordons de soudure.

Ainsi, la cuve de stockage ne présente pas de cordons de soudure pouvant déformer localement la paroi de la cuve, au niveau d'une zone spécifique, avantageusement en partie basse de la cuve de stockage. Ainsi, la drainabilité des produits liquides stockés dans la cuve est améliorée, et on s'affranchit de la présence de zone de rétention à l'intérieur de la cuve de stockage au niveau des berceaux de support.

La citerne selon l'invention peut également présenter une ou plusieurs des caractéristiques ci-dessous, considérées individuellement ou selon toutes les combinaisons techniquement possibles.

Avantageusement, chaque berceau de support de ladite pluralité présente, au niveau de sa surface de support sensiblement curviligne, un évidement. Ainsi l'évidement de chaque berceau ménagé au niveau de la surface de support permet de créer une zone spécifique et localisée qui n'est pas en directement en contact avec la paroi de la cuve de stockage.

Avantageusement, ledit évidement est situé au niveau de ladite portion basse dépourvue de cordons de soudure. Cet évidement est ménagé préférentiellement dans la zone formant le creux de la courbure C de la surface de support. Ainsi, cet évidement en position basse de chaque berceau de support permet de ne pas déformer localement la cuve au niveau de sa portion la plus basse lors du positionnement de la cuve sur les berceaux de support, améliorant ainsi la drainabilité des produits stockés dans la cuve.

Avantageusement, l'évidement est situé dans le creux de la forme sensiblement curviligne de la surface de support et au droit d'un axe vertical perpendiculaire à l'axe longitudinal et passant par le centre de ladite cuve de stockage.

Avantageusement, ledit évidement s'étend angulairement de façon symétrique par rapport au dit axe vertical, ainsi l'évidement est centré par rapport au point le plus bas de la cuve de stockage.

Avantageusement, la citerne est un véhicule citerne.

L'invention a également pour objet un procédé de fabrication d'un berceau de support d'une citerne pour le transport de produits liquides, pulvérulents ou gazeux selon l'invention caractérisé en ce qu'il comporte notamment une étape de réalisation d'un évidement par déformation locale de la surface de support, par emboutissage.

L'invention a également pour objet un procédé de fabrication d'une citerne pour le transport de produits liquides, pulvérulents ou gazeux selon l'invention caractérisé en ce qu'il comporte une étape de solidarisation par soudage de ladite cuve de stockage sur ladite pluralité de berceaux de support par solidarisation de la jonction entre la cuve de stockage et chaque berceau de support de ladite pluralité à l'exception de ladite portion basse dépourvue de cordons de soudure.

L'invention sera mieux comprise à la lumière de la description qui suit.

### BREVE DESCRIPTION DES FIGURES

D'autres caractéristiques et avantages de l'invention ressortiront plus clairement à la lecture de la description qui suit, en référence aux figures annexées.
La [fig 1] représente une vue en coupe d'une portion de citerne selon l'invention, selon un plan vertical transversal.
La [fig 2] représente un exemple réalisation d'un berceau de support de la citerne illustrée à la figure 1.
La [fig 3] est un schéma synoptique illustrant les principales étapes d'un procédé de fabrication d'un berceau de support selon l'invention.
La [fig 4] est un schéma synoptique illustrant les principales étapes d'un procédé de fabrication d'un véhicule citerne selon l'invention.

Sauf précision contraire, un même élément apparaissant sur des figures différentes présente une référence unique.

### DESCRIPTION DETAILLEE

Sauf précision contraire, les adjectifs « intérieur », « interne », « extérieur », « externe » sont utilisés dans la présente demande en référence à une direction radiale de la citerne de sorte que la partie intérieure, interne d'un élément est, suivant une direction radiale, plus proche de l'axe longitudinal de la citerne que la partie extérieure, externe du même élément.

Les adjectifs « haut », « haute », « bas », « basse », sont utilisés dans la présente demande en référence à un axe vertical Y de sorte que la partie haute est à une altitude plus élevée que la partie basse en prenant comme référentiel le sol sur lequel la citerne est posée.

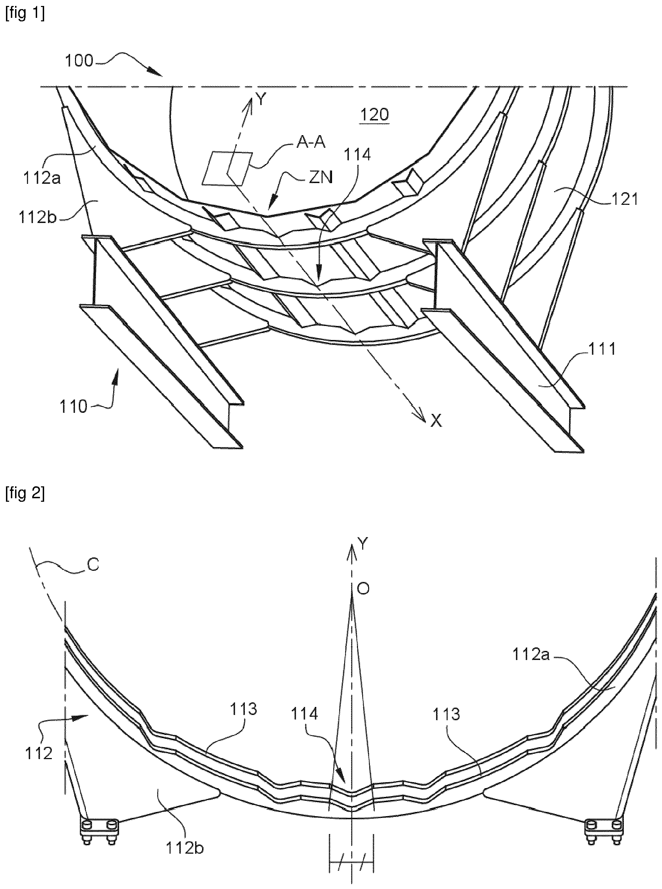

La [fig 1] représente une vue en coupe d'une portion de citerne 100 selon l'invention, selon un plan vertical transversal A-A, perpendiculaire à un axe longitudinal X.

La citerne 100 représentée à la figure 1 est un véhicule citerne comportant un porteur et une remorque 110 (représentée partiellement), s'étendant selon l'axe longitudinal X, présentant un châssis structurel 111 et une cuve de stockage 120 s'étendant également selon l'axe longitudinal X, reposant en appui sur le châssis structurel 111, via une pluralité de berceaux de support 112.

La cuve de stockage 120 présente une forme sensiblement cylindrique présentant par exemple une section circulaire ou encore une section ovoïde.

Le châssis structurel 111 comporte une pluralité de berceaux de support 112, qui sont répartis par paire selon l'axe longitudinal X sur la remorque 110. Les berceaux de support 112 forment des supports configurés pour recevoir et supporter la cuve de stockage 120, ainsi que pour rependre les différents efforts supportés et subis par la cuve de stockage 120 lors du roulage ou encore lors des phases de remplissage ou de vidange de la cuve de stockage 120.

Les berceaux de support 112 sont solidaires du châssis 111 via des moyens ad hocs, comme par exemple des moyens de vissage, des moyens de boulonnage, ou encore par soudage.

La [fig 2] représente plus particulièrement un exemple de réalisation de berceau de support 112 selon l'invention.

Les berceaux de support 112 présentent une partie supérieure 112a ayant une forme sensiblement curviligne destinée à être en contact avec la paroi 121 de la cuve 120 et une partie inférieure 112b, formant des pieds de support, destinée à être en contact avec le châssis 111.

La partie supérieure 112a présente une courbure générale C, de forme sensiblement ovoïde, ou circulaire. La courbure (représentée par la référence C) est complémentaire de la forme cylindrique de la cuve de stockage 120.

La partie supérieure 112a présente une ou plusieurs surface(s) de support 113 sensiblement curviligne s'étendant selon la courbure C destinée à venir épouser en grande partie la paroi 121 de la cuve de stockage 120, et à venir en contact avec celle-ci au moins en partie.

La cuve de stockage 120 est classiquement rendue solidaire des berceaux de support 112, et notamment de la partie supérieure 112a, via des moyens de solidarisation, tels que par exemple des cordons de soudure réalisés au niveau de la jonction entre la partie supérieure 112a des berceaux de support 112 et la paroi 121 de la cuve de stockage 120, et plus précisément au niveau du pourtour de la surface de support 113.

Selon l'invention, les cordons de soudure, entre la cuve de stockage 120 et les berceaux de support 112, s'étendent le long de la courbure en C au niveau du pourtour de surface de support 113 à l'exception d'une portion basse ZN de la cuve de stockage 120, i.e. au niveau du creux de la forme curviligne des berceaux de support 112. Cette portion basse ZN de la cuve de stockage 120, dépourvue de soudure périphérique, s'étend angulairement de façon symétrique par rapport à un axe vertical Y passant par le centre O de la cuve de stockage 220.

On définit par « portion basse », une zone se situant dans la portion inférieure de ladite cuve de stockage 220 englobant le point le plus bas de la cuve se trouvant en droit dudit axe vertical Y.

L'absence de soudure, ou de points de soudure, entre les berceaux de support 112 et la cuve de stockage 120 au niveau de cette portion basse ZN permet de s'affranchir de tout risque de déformation locale due à une opération de solidarisation, par exemple une opération de soudure, par exemple par retreint de la structure de la cuve de stockage 120 lors du refroidissement des zones échauffées par la soudure.

Grâce à la disparition des moyens de solidarisation, par exemple des points de soudure, en partie basse de la cuve de stockage 120, la drainabilité des produits stockés dans la cuve est améliorée par disparition des zones de déformations locales, et plus particulièrement des zones rétention dues aux retreints de la structure de la cuve de stockage 120 après les opérations de soudage.

Toutefois, la reprise d'effort est toujours assurée par les cordons de soudure solidarisant la cuve de stockage 120 sur au moins 80% de la périphérie de la surface de support 113 formée par les berceaux de support 112.

Selon une alternative de réalisation, le berceau de support 112 peut également présenter un évidement 114 au niveau de la partie la plus basse de la surface de support 113.

Cet évidement 114 est représenté sur les [fig 1] et [fig 2].

L'évidement 114 est ménagé en regard de la portion basse ZN de la cuve de stockage 120, et plus particulièrement au niveau du creux de la courbure en C de la surface de support 113, situé en regard de la portion basse ZN dépourvue de soudure.

L'évidement 114 est par exemple une rainure en forme de U, en forme de V, en arrondi, en forme de C ou de tout autre forme permettant au berceau de support 112 de ne pas être directement en contact au niveau de cette portion basse ZN avec la cuve de stockage 120.

Avantageusement, l'évidement 114 est formé par pliage de la surface de support 113, par exemple par emboutissage.

Avantageusement, cet évidement 114 est ménagé dans la zone formant le creux de la courbure C de la surface de support 113 en regard de la portion basse ZN de la cuve de stockage 230. Ainsi, cet évidement 114 en position basse du berceau de support 112 permet de s'assurer que la cuve de stockage ne se déforme pas localement au niveau de la portion basse ZN, lors du positionnement de la cuve sur les berceaux de support 112. Grâce à l'utilisation de cet évidement 114, on améliore davantage la drainabilité des produits stockés dans la cuve par rapport au premier exemple de réalisation, en s'affranchissant de tout risque de déformation locale de la structure de la cuve de stockage au niveau de sa partie la plus basse.

L'invention a également pour objet un procédé 200 de fabrication d'un berceau de support selon l'invention.

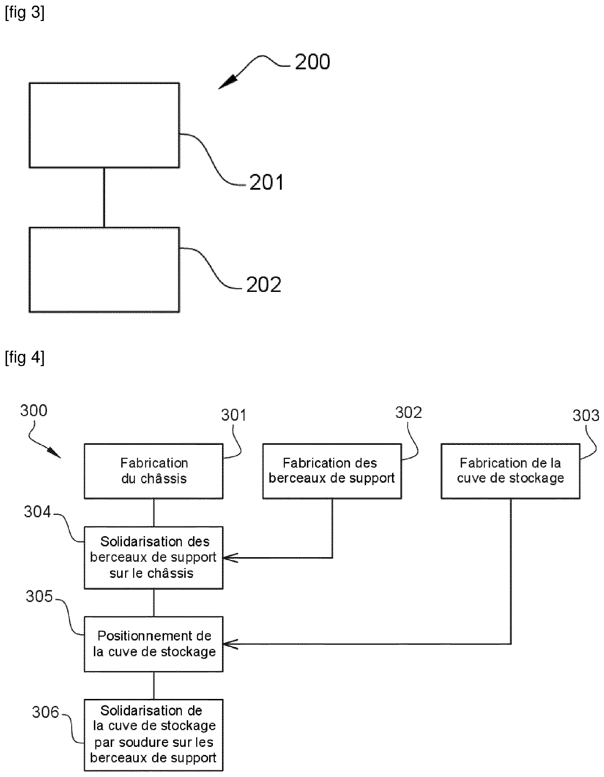

La [fig 3] est un schéma synoptique illustrant les principales étapes dudit procédé 200 de fabrication d'un berceau de support selon l'invention.

Dans une première étape 201, on réalise, par des opérations de formage et de cintrage, la forme générale du berceau de support 112.

Dans une deuxième étape 202, on réalise une déformation locale au niveau du creux de la courbure en C de la surface de support 113, par exemple par une opération d'emboutissage.

L'invention concerne également un procédé 300 de fabrication d'un véhicule citerne comportant une cuve de stockage 120 et un châssis 111 présentant une pluralité de berceaux de support 112. Le procédé 300 de fabrication, dont les principales étapes sont représentées par le schéma synoptique de la [fig 4], comporte notamment les étapes suivantes :
- une étape 301 de fabrication d'un châssis 111 de remarque 110 ;
- une étape 302 de fabrication d'au moins un berceau de support 112 selon le procédé de fabrication 200 décrit précédemment ;
- une étape 303 de fabrication d'une cuve de stockage 120 ;
- une étape 304 de solidarisation de la pluralité de berceaux de support 112 sur le châssis 111 par soudage ;
- une étape 305 de positionnement de ladite cuve de stockage 120 sur la pluralité de berceaux de support 112 ;
- une étape 306 de solidarisation de ladite cuve de stockage 120 sur la pluralité de berceaux de support 112 par réalisation de cordons de soudure à la jonction de la cuve de stockage 120 et de la partie supérieure 112a de chaque berceau de support 112 à l'exception d'une portion basse ZN de la cuve de stockage 120.

## Revendications

1. Citerne (100) pour le transport de produits liquides, pulvérulents ou gazeux comportant une cuve de stockage (120) s'étendant selon un axe longitudinal (X), un châssis (111), une pluralité de berceaux de support (112) solidaire dudit châssis (111), chaque berceau de support (112) de ladite pluralité définissant une surface de support (113) sensiblement curviligne configurée pour recevoir et soutenir ladite cuve de stockage (120), ladite citerne étant **caractérisée en ce que** ladite cuve de stockage (120) est rendue solidaire de ladite surface de support (113) de chaque berceau de support (112) de ladite pluralité par des cordons de soudure et **en ce que** ladite cuve de stockage (120) présente une portion basse (ZN), située en regard de la surface de support (113), dépourvue de cordons de soudure.

2. Citerne (100) pour le transport de produits liquides, pulvérulents ou gazeux selon la revendication précédente **caractérisée en ce que** chaque berceau de support (112) de ladite pluralité présente, au niveau de sa surface de support (113) sensiblement curviligne, un évidement (114).

3. Citerne (100) pour le transport de produits liquides, pulvérulents ou gazeux selon la revendication précédente **caractérisée en ce que** ledit évidement (114) est situé au niveau de ladite portion basse (ZN) dépourvue de cordons de soudure.

4. Citerne (100) pour le transport de produits liquides, pulvérulents ou gazeux selon l'une des revendications 2 à 3 **caractérisée en ce que** ledit évidement (114) est situé dans le creux de la forme sensiblement curviligne de la surface de support (113) et au droit d'un axe vertical (Y) perpendiculaire à l'axe longitudinal (X) et passant par le centre de ladite cuve de stockage (120).

5. Citerne (100) pour le transport de produits liquides, pulvérulents ou gazeux selon la revendication précédente **caractérisée en ce que** ledit évidement (114) s'étend angulairement de façon symétrique par rapport au dit axe vertical (Y).

6. Citerne (100) pour le transport de produits liquides, pulvérulents ou gazeux selon l'une des revendications précédentes **caractérisée en ce que** ladite citerne (100) est un véhicule citerne.

7. Procédé (200) de fabrication d'un berceau de support (112) d'une citerne (100) pour le transport de produits liquides, pulvérulents ou gazeux selon l'une des revendications 1 à 5 **caractérisé en ce qu'**il comporte une étape de réalisation d'un évidement (114) par déformation locale de la surface de support (113), par emboutissage.

8. Procédé (300) de fabrication d'une citerne (100) pour le transport de produits liquides, pulvérulents ou gazeux selon l'une des revendications 1 à 5 **caractérisé en ce qu'**il comporte une étape (306) de solidarisation par soudage de ladite cuve de stockage (120) sur ladite pluralité de berceaux de support (112) par solidarisation de la jonction entre la cuve de stockage (120) et chaque berceau de support (112) de ladite pluralité à l'exception de ladite portion basse (ZN) dépourvue de cordons de soudure.
